# EUROPEAN PATENT APPLICATION

(11) **EP 4 556 712 A1**
(43) Date of publication of application: **21.05.2025**
(21) Application number: 23383176.7
(22) Date of filing: 17.11.2023
(51) Int. Cl.: F03D 80/50, F03D 80/80

(54) **LADDER BRACKET OF A SECTION OF A TOWER OF A WIND TURBINE AND METHOD OF ASSEMBLY OF A WIND TURBINE**

(71) Applicant: Nordex Energy Spain S.A.U., 31395 Barásoain (Navarra) (ES)
(72) Inventor: VILA DE LA ORDEN, Jorge Ricardo, 02008 Albacete (ES); ARLABAN, Teresa, 31395 BARASOAIN (ES)
(74) Representative: Pons

(57) **Abstract**

The object of the invention relates to a ladder bracket of a section of a tower of a wind turbine, to a set comprising a segment of a section of a tower of a wind turbine, at least one ladder bracket and a ladder section configured to be attached to a second part of the at least one ladder bracket, and also relates to a method of assembly of a wind turbine.

## Description

### OBJECT OF THE INVENTION

The object of the invention relates to a ladder bracket of a section of a tower of a wind turbine, to a set comprising a segment of a section of a tower of a wind turbine, at least one ladder bracket and a ladder section configured to be attached to a second part of the at least one ladder bracket.

The invention also relates to a method of assembly of a wind turbine.

### BACKGROUND OF THE INVENTION

The wind turbines comprise a tower, a nacelle which houses the electrical generator and a rotor formed in turn by at least two blades. The tower of the wind turbine supports the nacelle and the rotor. Large wind turbines have steel, lattice, or reinforced concrete towers or even mixed-type towers, the latter comprising sections of different materials, for example, a lower section of concrete and an upper section of steel or lattice.

Due to the height of the wind turbines, the tower has to be divided into several annular sections which are stacked during the wind turbine assembly stage thus forming the full height of the tower. Dividing the tower into sections has the advantage that each section has a size such that its transport by road or rail is easier.

One of the most commonly used materials for large towers is concrete, since it involves competitive costs and performance compared to those for the production of steel towers of similar characteristics. However, the weight of each concrete tower section can easily exceed one hundred tons, this fact being infrequent for metal tower sections, so stacking the concrete sections requires heavy-tonnage lifting and positioning means. The cost of using such lifting and positioning means, which may be for example a crane, is directly related to the tonnage and height that it is capable of handling and the time of use thereof. This high-tonnage crane is also used for lifting and positioning the nacelle, as the weight of the nacelle may also exceed 100 tons.

The design of wind turbine components and the design of the connections between them once placed, should take into account the loads they will have to bear throughout their useful life to ensure the proper functioning thereof. In particular, the connections between different concrete sections of the tower or between an upper concrete section and an adapter disposed above the upper concrete section for the transition between the concrete sections and the steel sections in the case of hybrid towers or for the transition between the concrete sections and the nacelle of the wind turbine in the case of full concrete towers, are adapted to withstand the loads they will have to bear throughout their useful life, such as gravitational loads, assembly loads, inertial loads, aerodynamic loads, operational loads and other loads that depend on the location where the wind turbine is to be installed, such as earthquakes.

The tower generally includes an interior ladder along the height of the tower for assembling an elevator that can be displaced along the tower.

However, the above-cited loads may lead to:
- variations in the length of the sections associated with the compression of the tower, causing deformations in the ladder, which is a problem for the elevator;
- deformations of the ladder in the form of bellies, making necessary to carry out readjustments/maintenance are necessary between the ladder which comprises a constant length, and the tower which can vary its length, mainly under compression, at the end of assembly and over time.

The present invention solves the problems described above by providing a concrete segment of an upper section of a wind turbine tower which minimizes the undesirable local effects in the connection area between the upper concrete section and the adapter.

### DESCRIPTION OF THE INVENTION

The invention relates to a ladder bracket of a section of a tower of a wind turbine comprising a ladder which in turn comprises a ladder section, wherein the tower section comprises at least one segment which in turn comprises an inner wall, and wherein the ladder bracket comprises:
- a first part configured to be attached, in use, to the inner wall of the at least one segment of the tower section; and
- a second part configured to be connected to the first part, wherein, in use, the ladder section is configured to be attached to the second part, so establishing a connection between the first part and the second part;
wherein the connection between the first part and the second part is a sliding connection allowing a relative position between the first part and the second part to be modified.

In this way, the ladder maintains its length constant along the height of the tower and transmits all the weight to the ground, since there are no reactions to the bracing of the tower, or they are minimal.

Optionally, the relative position between the first part and the second part is allowed to be modified along a longitudinal direction of the ladder.

Furthermore, no readjustments/maintenance are necessary between the ladder which comprises a constant length, and the tower which can vary its length, mainly under compression, at the end of assembly and over time.

The variations in the relative positions between the first part and the second part of the ladder bracket may occur during the erection of the tower, in particular, in a hybrid or concrete tower, after the erection of the individual tower sections and/or after the post-tensioning of the concrete sections, for example.

Optionally, the ladder bracket further comprises:
- a pressure plate;
- a sliding piece disposed between the pressure plate and the second part, and between the pressure plate and the first part;
   wherein the sliding piece is configured to be in contact with the pressure plate, the first part and the second part; and
- tightening means configured to tight the pressure plate against the sliding piece and the first part, in consequence, attaching the second part to the first part.

In this way, if the external forces are below a first threshold, the relative position between the first part and the second part does not change since the tightening means ensure sufficient frictional force so that there is no relative displacement in a longitudinal direction.

Optionally, the sliding piece is configured to be slidable, in use, with respect to the first part and/or the second part. When the first part is attached to the sliding piece, both of them, the first part and the sliding piece are configured to be slidable, in use, with respect to the second part. In this way, the second part attached to the ladder section maintains its fixed position and the ladder bracket of the present invention is self-adjustable and absorbs the compression of the tower during the different stages of assembly, so avoiding deformations in the form of bellies.

Optionally, the sliding piece comprises a central portion configured to be in contact with the first part and the pressure plate, and at least one lateral portion configured to be in contact with the second part and the pressure plate.

Optionally, the sliding piece comprises two lateral portions configured to be in contact with the second part and the pressure plate.

Optionally, the second part comprises two vertical profiles, wherein the sliding piece is configured to be slidable, in use, with respect to the two vertical profiles of the second part.

Optionally, the second part comprises two arms configured to support the ladder section.

Optionally, the second part comprises first fixation means configured to fix the ladder section to the two arms.

Optionally, the two arms are fixed to the two vertical profiles.

Optionally, the first part comprises an omega profile. Preferably, the omega profile comprises a central portion configured to be in contact with the sliding piece and at least one lateral portion configured to be attached, in use, to the inner wall of the at least one segment of the tower section.

Optionally, the ladder bracket further comprises at least one wedge configured to be disposed between the first part and the sliding piece.

Optionally, the at least one wedge is configured to be disposed between the omega profile of the first part and the sliding piece.

This allows to align the ladder section with regard to the vertical direction since inner wall in case the segment is frustoconical.

Optionally, the ladder bracket further comprises second fixation means configured to fix, in use, the first part to the inner wall of the at least one segment of the tower section.

Optionally, the sliding piece is made of a thermoplastic polymer, preferably polypropylene or polyethylene.

The invention also related to a set comprising a segment of a section of a tower of a wind turbine, at least one ladder bracket of any of preceding claims and a ladder section configured to be attached to the second part of the at least one ladder bracket.

This set so configured allows to regulate the ladder section along the ladder brackets in a uniformly or an independent way.

Optionally, the section is a steel section or a concrete section, being part of a steel-concrete tower or a full steel tower for the first case, or a steel-concrete tower or a full concrete tower for the second case, respectively.

Preferably, the set comprises at least two ladder brackets, wherein the segment comprises a height, and wherein the at least two ladder brackets are disposed along the height of the segment. Optionally, the first part of the at least two ladder brackets is different for at least one of the at least two ladder brackets.

The invention also relates to a wind turbine comprising a tower which in turn comprises at least a section comprising at least a set as described above.

Optionally, the tower is a full concrete tower or a concrete-steel tower.

In this way, due to the fact that the deformations in the concrete section vary the position of the steel sections, the ladder bracket of the present invention is also applicable to section wherein deformations are not expected.

The invention also relates a method of assembling a wind turbine comprising a tower which in turn comprises a section which in turn comprises a segment which in turn comprises an inner wall, and a ladder comprising at least a ladder section,
wherein the method comprises a step of attaching the ladder section to the inner wall of the segment by means of the ladder bracket described above, which in turn comprises the following steps:
   - a step of attaching the first part to the inner wall of the at least one segment of the tower section; and
   - a step of connecting the second part to the first part,
   - a step of attaching the ladder section to the second part,
wherein the step of connecting the second part to the first part is carried out by means of a sliding connection that allows a relative position between the first part and the second part to be modified.

Optionally, the method, when it is carried out by means of the ladder bracket comprising:
- the pressure plate;
- the sliding piece disposed between the pressure plate and the second part, and between the pressure plate and the first part;
   wherein the sliding piece is configured to be in contact with the pressure plate, the first part and the second part; and
- tightening means configured to tight the pressure plate against the sliding piece and the first part, in consequence, attaching the second part to the first part;
comprises the following steps:
- a step of disposing the sliding piece between the pressure plate and the second part, and between the pressure plate and the first part, the sliding piece making contact with the pressure plate, the first part and the second part;
- a step of tightening the pressure plate against the sliding plate and the first part, in consequence, attaching the second part to the first part.

### DESCRIPTION OF THE FIGURES

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:
Figure 1 shows a ladder bracket according to a first embodiment of the invention attached to the inner wall of a segment of a section of a tower of a wind turbine, wherein the ladder section has been represented in dashed lines.
Figure 2 shows a rear view of Figure 1.
Figure 3 shows a detail of Figure 1 showing the disposition of the elements of the ladder bracket.
Figure 4 shows an exploded view of a ladder bracket according to a second embodiment of the invention.
Figure 5 shows a segment of a section of a tower of a wind turbine wherein the ladder section is preassembled by means of the ladder bracket.
Figure 6 shows a tower of a wind turbine according to the invention.
Figure 7 shows in the left side, a first part of the ladder bracket of the invention according to a third embodiment, also including wedges, and in the right side, a segment wherein the first part of the ladder bracket is configured to be attached, showing the attaching positions for several ladder brackets.

### PREFERRED EMBODIMENT OF THE INVENTION

The following is a detailed description of the ladder bracket (30) of a section (50) of a tower (100) of a wind turbine comprising a ladder which in turn comprises a ladder section (20), wherein the tower section comprises at least one segment (10) which in turn comprises an inner wall (11), and wherein the ladder bracket (30) comprises:
- a first part (1) configured to be attached, in use, to the inner wall (11) of the at least one segment (1) of the tower section; and
- a second part (2) configured to be connected to the first part (1), wherein, in use, the ladder section (20) is configured to be attached to the second part (2), so establishing a connection between the first part (1) and the second part (2); wherein the connection between the first part (1) and the second part (2) is a sliding connection allowing a relative position between the first part (1) and the second part (2) to be modified, preferably along a longitudinal direction of the ladder.

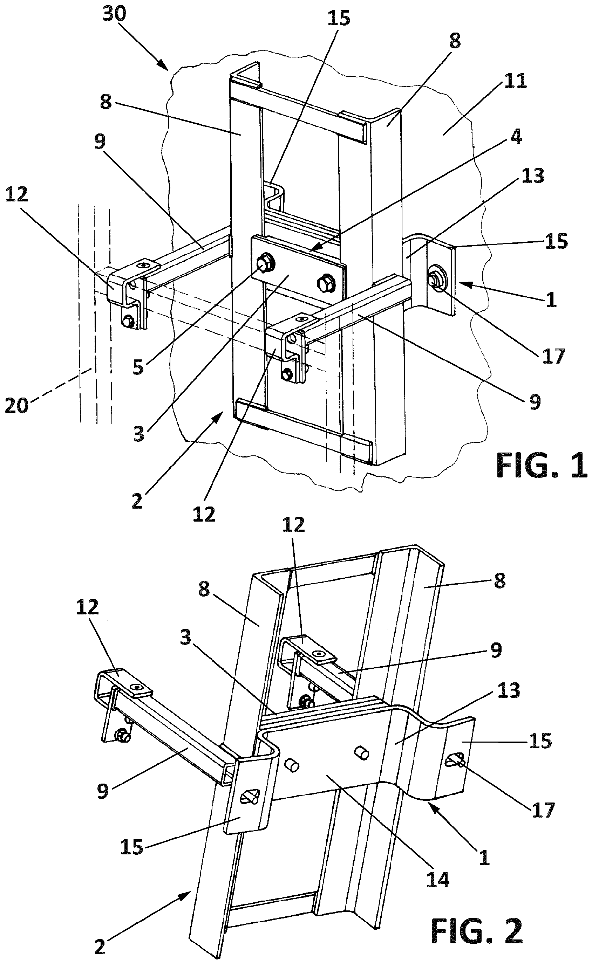

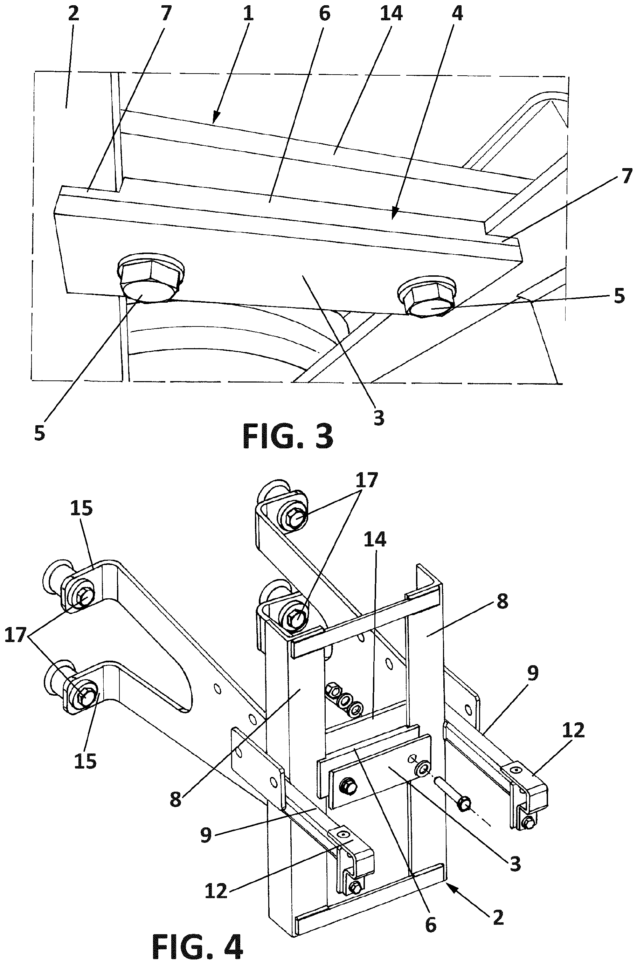

Optionally, the ladder bracket (30) further comprises, for a preferred embodiments shown in Figures 1 to 4:
- a pressure plate (3);
- a sliding piece (4) disposed between the pressure plate (3) and the second part (2), and between the pressure plate (3) and the first part (1);
   wherein the sliding piece (4) is configured to be in contact with the pressure plate (3), the first part (1) and the second part (2); and
- tightening means (5) configured to tight the pressure plate (3) against the sliding piece (4) and the first part (1), in consequence, attaching the second part (2) to the first part (1).

Preferably, the sliding piece (4) is configured to be slidable, in use, with respect to the first part (1) and/or the second part (2).

Preferably, the sliding piece (4) comprises a central portion (6) configured to be in contact with the first part (1) and the pressure plate (3), and at least one lateral portion (7) configured to be in contact with the second part (2) and the pressure plate (3), more preferably two lateral portions (7) configured to be in contact with the second part (2) and the pressure plate (3).

Preferably, the second part (2) comprises two vertical profiles (8), wherein the sliding piece (4) is configured to be slidable, in use, with respect to the two vertical profiles (8) of the second part (2).

Preferably, the second part (2) comprises two arms (9) configured to support the ladder section (20).

Preferably, the second part (2) comprises first fixation means (12) configured to fix the ladder section (20) to the two arms (9).

Preferably, the two arms (9) are fixed to the two vertical profiles (8).

In the embodiment shown in Figures 1 to 4, the first part (1) comprises an omega profile (13).

Preferably, the omega profile (13) comprises a central portion (14) configured to be in contact with the sliding piece (4) and at least one lateral portion (15) configured to be attached, in use, to the inner wall (11) of the at least one segment (10) of the tower section.

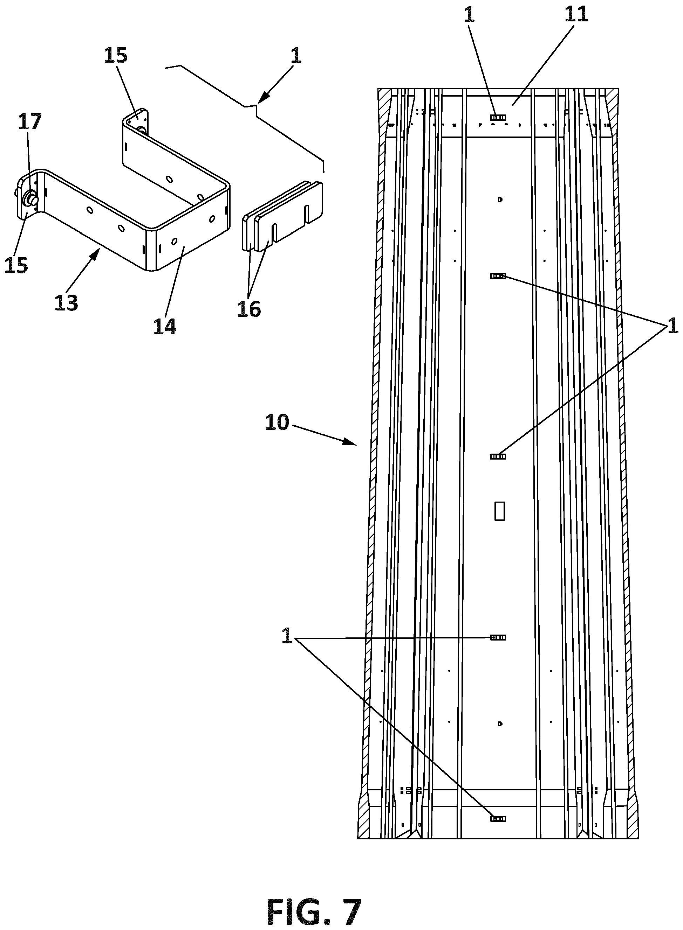

As shown in Figure 7, the ladder bracket may comprise at least one wedge (16) configured to be disposed between the omega profile (13) of the first part and the sliding piece (4).

Preferably, the ladder bracket (30) further comprises second fixation means (17) configured to fix, in use, the first part (1) to the inner wall (11) of the at least one segment (1) of the tower section.

Preferably, the sliding piece (4) is made of a thermoplastic polymer, preferably polypropylene or polyethylene.

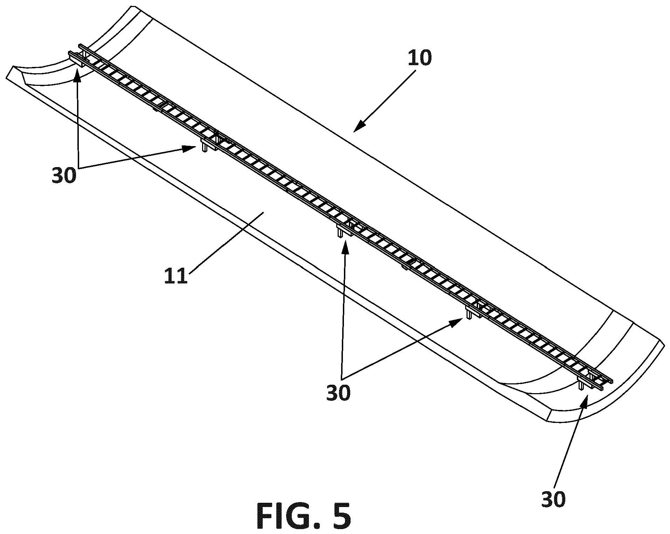

The set comprising a segment (10) of a section (50) of a tower (100) of a wind turbine, at least one ladder bracket (30) as described above and a ladder section (20) configured to be attached to the second part (2) of the at least one ladder bracket (30) is shown in Figure 5.

Preferably, the set comprises at least two ladder brackets (30), wherein the segment (10) comprises a height, wherein the at least two ladder brackets (30) are disposed along the height of the segment (10).

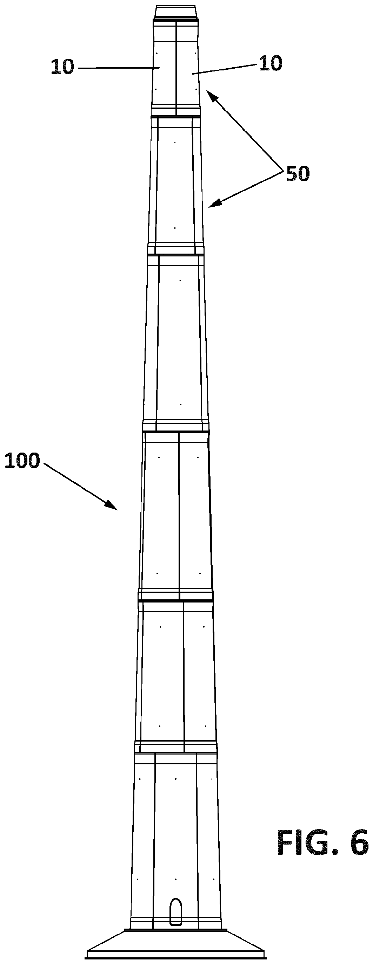

The invention also relates to a wind turbine comprising a tower (100) shown in Figure 6, which in turn comprises at least a section (50) comprising at least a set as described above.

Preferably, the tower (100) is a full concrete tower or a concrete-steel tower.

## Claims

1. Ladder bracket (30) of a section (50) of a tower (100) of a wind turbine comprising a ladder which in turn comprises a ladder section (20), wherein the tower section comprises at least one segment (10) which in turn comprises an inner wall (11), and wherein the ladder bracket (30) comprises:
- a first part (1) configured to be attached, in use, to the inner wall (11) of the at least one segment (1) of the tower section; and
- a second part (2) configured to be connected to the first part (1), wherein, in use, the ladder section (20) is configured to be attached to the second part (2), so establishing a connection between the first part (1) and the second part (2);
**characterized in that** the connection between the first part (1) and the second part (2) is a sliding connection allowing a relative position between the first part (1) and the second part (2) to be modified.

2. The ladder bracket (30) of claim 1, wherein the relative position between the first part (1) and the second part (2) is allowed to be modified along a longitudinal direction of the ladder.

3. Ladder bracket (30) of any of preceding claims, further comprising:
- a pressure plate (3);
- a sliding piece (4) disposed between the pressure plate (3) and the second part (2), and between the pressure plate (3) and the first part (1);
wherein the sliding piece (4) is configured to be in contact with the pressure plate (3), the first part (1) and the second part (2); and
- tightening means (5) configured to tight the pressure plate (3) against the sliding piece (4) and the first part (1), in consequence, attaching the second part (2) to the first part (1).

4. The ladder bracket (30) of claim 3, wherein the sliding piece (4) is configured to be slidable, in use, with respect to the first part (1) and/or the second part (2).

5. The ladder bracket (30) of any claims 3 to 4, wherein the sliding piece (4) comprises a central portion (6) configured to be in contact with the first part (1) and the pressure plate (3), and at least one lateral portion (7) configured to be in contact with the second part (2) and the pressure plate (3).

6. The ladder bracket (30) of claim 5, wherein the sliding piece (4) comprises two lateral portions (7) configured to be in contact with the second part (2) and the pressure plate (3).

7. The ladder bracket (30) of any claims 3 to 6, wherein the second part (2) comprises two vertical profiles (8), wherein the sliding piece (4) is configured to be slidable, in use, with respect to the two vertical profiles (8) of the second part (2).

8. The ladder bracket (30) of any of preceding claims, wherein the second part (2) comprises two arms (9) configured to support the ladder section (20), the second part (2) preferably further comprising first fixation means (12) configured to fix the ladder section (20) to the two arms (9).

9. The ladder bracket (30) of claims 7 and 8, wherein the two arms (9) are fixed to the two vertical profiles (8).

10. The ladder bracket (30) of any of preceding claims, wherein the first part (1) comprises an omega profile (13).

11. The ladder bracket (30) of claims 3 and 10, wherein the omega profile (13) comprises a central portion (14) configured to be in contact with the sliding piece (4) and at least one lateral portion (15) configured to be attached, in use, to the inner wall (11) of the at least one segment (10) of the tower section.

12. The ladder bracket (30) of claim 3, wherein the sliding piece (4) is made of a thermoplastic polymer, preferably polypropylene or polyethylene.

13. Set comprising a segment (10) of a section (50) of a tower (100) of a wind turbine, at least one ladder bracket (30) of any of preceding claims and a ladder section (20) configured to be attached to the second part (2) of the at least one ladder bracket (30).

14. The set of claim 13 comprising at least two ladder brackets (30), wherein the segment (10) comprises a height, wherein the at least two ladder brackets (30) are disposed along the height of the segment (10).

15. Wind turbine comprising a tower (100) which in turn comprises at least a section (50) comprising at least a set of any of claims 13 or 14.

16. Method of assembling a wind turbine comprising a tower (100) which in turn comprises a section (50) which in turn comprises a segment (10) which in turn comprises an inner wall (11), and a ladder comprising at least a ladder section (20),
wherein the method comprises a step of attaching the ladder section (20) to the inner wall (11) of the segment by means of the ladder bracket (30) of any of claims 1 to 12, which in turn comprises the following steps:
- a step of attaching the first part (1) to the inner wall (11) of the at least one segment (1) of the tower section; and
- a step of connecting the second part (2) to the first part (1),
- a step of attaching the ladder section (20) to the second part (2),
wherein the step of connecting the second part (2) to the first part (1) is carried out by means of a sliding connection that allows a relative position between the first part (1) and the second part (2) to be modified.
